Europäisches Patentamt

European Patent Office

Office européen des brevets

(11) Publication number: **0 266 828 B1**

(12) **EUROPEAN PATENT SPECIFICATION**

(45) Date of publication of patent specification: **15.04.92**  (51) Int. Cl.⁵: **A01N 33/08**, C02F 1/50

(21) Application number: **87202027.6**

(22) Date of filing: **21.10.87**

The file contains technical information submitted after the application was filed and not included in this specification

(54) **Control of biofouling with certain alkylthioalkylamines.**

(30) Priority: **22.10.86 US 921937**
**22.10.86 US 921991**

(43) Date of publication of application:
**11.05.88 Bulletin 88/19**

(45) Publication of the grant of the patent:
**15.04.92 Bulletin 92/16**

(84) Designated Contracting States:
**AT BE DE ES FR GB IT NL SE**

(56) References cited:
**US-A- 3 291 683**
**US-A- 3 524 719**

(73) Proprietor: **THE DOW CHEMICAL COMPANY**
**2030 Dow Center Abbott Road P.O. Box 1967**
**Midland Michigan 48640-1967(US)**

(72) Inventor: **Walter, Richard W., Jr.**
**26 Lexington Court**
**Midland Michigan 48640(US)**
Inventor: **Johnson, Robert L.**
**1093 South Hilton Apt. 128**
**Boise Idaho 83705(US)**
Inventor: **Relenyi, Attila G.**
**516 Bark Lane**
**Midland Michigan 48640(US)**

(74) Representative: **Smulders, Theodorus A.H.J., Ir. et al**
**Vereenigde Octrooibureaux Nieuwe Parklaan 97**
**NL-2587 BN 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

In recent years, the methods employed for treating recirculating cooling tower systems have changed dramatically. Previous widely used methods for corrosion and deposit control involved the use of chromate based inhibitors plus an acid for scale control and not too much use of dispersants or antifoulants. The pH of the recirculating water was typically acidic and occasionally as high as neutral and the hardness of the water was relatively low due to the nature of the treatment and the few cycles of concentration (e.g., about 3). Such conditions resulted in comparatively low bioburden and biofouling. Good microbiological control was typically achieved by use of chlorine alone or in conjection with certain nonoxidizing biocides to supplement the chlorine.

Due to the dramatic change in water treatment methods, the problem of biofouling of cooling tower systems has become much more severe. The pH of the recirculating water is much more alkaline and the hardness of the recirculating water has also increased due to the nature of the never treatment and the substantially higher cycles of concentration typically employed (e.g., 6-10).

The increase in the pH and hardness of the recirculating water has substantially reduced the effectiveness of chlorine and certain non-oxidizing biocides for controlling biofouling.

In addition, it is well known in the art that even subtle changes in a given environment can have a profound impact on the quality and quantity of any microflora present. Moreover, it is also well known that continuous use of a biocide will result in selections of organisms resistant to the biocide which can lead to ineffectiveness of that biocide over time.

It is desirable to have a commercially acceptable method for controlling biofouling employing a biocide which is effective in inhibiting microorganisms at an alkaline pH and/or at high water hardness.

The present invention is directed to a method for inhibiting microorganisms at an alkaline pH and/or at a high water hardness, which comprises contacting the microorganisms with an effective amount of n-decylthioethylamine or the acid addition salts thereof.

As used herein the term "inhibit" or "inhibition" refers to suppresion, control, kill or any other interference with the normal life processes of microorganisms that is adverse to the microorganisms; the term "alkaline pH" refers to any pH greater than 7; the term "high water hardness" refers to a hardness of greater than 100 ppm. For the purposes of the present invention "water hardness" has the same meaning as described in Microbiological Test Methods Compendium, First Edition, May, 1983, Chemical Specialties Manufacturers Association, 1001 Connecticut Avenue, N.W., Washington, D.C. 20036. Unless stated otherwise, as used herein hardness is expressed as parts per million (ppm) $CaCO_3$.

The term "effective amount" refers to that amount of one or more of the compounds of formula I needed to inhibit organisms. Typically, this amount varies from 0.01 to 5000 parts per million (ppm) by weight depending upon the specific industrial system conditions and the specific microorganism desired to be inhibited. A preferred effective amount is from 0.1 to 500 ppm, and a more preferred effective amount is from 1 to 50 ppm.

The term "biofouling" refers to slime formation, deposit formation, corrosion, discoloration, odor production or any other adverse consequences in industrial systems that are directly, indirectly or otherwise due to the presence or growth of microorganisms that are free in solution or are associated with a surface; the term "controlling biofouling" refers to prevention, reduction or elimination of biofouling.

In the process of the present invention, the microorganisms that are inhibited are those microorganisms that are present or are capable of being present in industrial systems and are directly, indirectly or otherwise responsible for biofouling in industrial systems. Such microorganisms are planktonic or sessile and include bacteria, fungi and algae. A partial, but by no means exhaustive list, of the organisms that are inhibited by the method of the present invention is as follows:

Bacillus subtilis, Pseudomonas aeruginosa, Enterobacter aerogenes, Escherichia coli, Proteus vulgaris, Staphylococcus aureus, Aspergillus niger, Candida albicans, Desulfovibrio desulfuricas, Actinomyces viscosus, Clostridium perfringens, Clostridium septicum, Bacteroides fragilis, Bacteroides multiacidus, Streptococcus faecalis, Streptococcus mutans, Lactobacillus casei, Streptococcus bovis, Fusobacterium necrophorum, Mucor michei, Erwinia amylovora, Salmonella typhimurium, Klebsiella pneumoniae, Sphaerotilus, Begiatoa, Crenothrix, Aeromonas, Leptothrix, Pseudomonas putida, Pseudomonas fluorescens, Pseudomonas stutzeri, Pseudomonas cepacia, Zoogloea, Alcaligenes, Thiobacillus, Penicillium, Saccharomyces, Trichoderma, Aureobasidium, Chlorella, Volothrix, Anacystis, Anabaena, Oscillatoria, Diatoma, and Flagilaria.

Industrial systems that have the requisite alkaline pH and/or high hardness include, for example, cooling towers, paper mills, paint and paint films, cosmetics, and metalworking fluids.

Aqueous systems prone to algae biofouling that are suitable for application of the process of the present invention include those aqueous systems that are exposed to substantial amounts of light. Such aqueous systems include, for example, recirculating and once-through cooling tower systems, waste water treatment systems, settling ponds, swimming pools, reservoirs, ditches and bogs. Preferred systems for application of the process of the present invention are cooling tower systems.

It is also contemplated that the n-decylthioethylamine can be applied to solid objects that are either in contact with aqueous systems or are themselves prone to algae attack due to high water or moisture content and the requisite exposure to light. Such solid objects include, for example, wood or lumber, textiles or fabrics and plastics. In the treatment of lumber, from 1 to 100 gallons (3.79ℓ-379ℓ) of solvent composition containing the amine is usually applied per 1,000 square feet (1 to 100 liters/24.543 square meters) of surface to be treated. In the pressure or vacuum treatment of lumber, sufficient composition is employed adequately to impregnate the wood.

In the process of the present invention, it is preferred that the pH of the industrial system is between 7.5 and 12 and a more preferred range is between 8 and 9.5. It is preferred that the water hardness is between 150 ppm and 2,000 ppm and more preferred that the hardness is between 300 ppm and 1,500 ppm.

Methods for the preparation of n-decylthioethylamine are known in the art. These materials can be prepared by the reaction of thioalkylamine with an alcohol of the necessary chain length. They can also be prepared by reacting ethyl oxazoline with a mercaptan and then hydrolyzing the resulting product to remove propionic acid.

The acid addition salts of n-decylthioethylamine can be conveniently prepared by methods known in the art, e.g., by acidifying with a suitable acid such as HCl, HBr, $H_3PO_4$, $HNO_3$, $H_2SO_4$ or other mineral acid; or weaker acid such as acetic, propionic, butyric, glycolic, or other monofunctional or polyfunctional carboxylic acid to obtain the acid addition salt. It is contemplated that mixtures of acids and/or alkylthioalkylamines can be employed to obtain the corresponding mixture of the acid addition salts. The hydrochloride salts of the amine compounds are preferred.

Although a variety of biocides are used in industrial systems, it has been found that certain biocides that are effective at one pH can be ineffective at other pH's. Furthermore, for many types of biocides the pH response is totally unpredictable.

Heretofore, standard procedures for determining antimicrobial activity typically used in the art are performed at about neutral pH. Reliance upon efficacy determination of biocides at neutral pH can be partially or totally misplaced when such biocide is to be applied to an industrial system at an alkaline pH. In order to arrive at the process of the present invention, an improved assay wherein the microbial inhibitory activity of compounds at alkaline pH is determined has been developed to allow determination of pH effects on agar based bioefficacy determinations.

It is contemplated that the amine can be applied to industrial systems at alkaline pH and/or at high hardness in the form of compositions. The composition, in addition to the amine can contain inert ingredients, antimicrobial adjuvants, or other active ingredients. The exact concentration of the amine to be employed in the treating compositions is not critical to bioefficacy but may be critical to end use formulations and may vary considerably provided that an effective amount is capable of being supplied to the industrial system. The concentration of said amine compounds in liquid compositions generally is from 0.00001 to 15 percent by weight; however, concentrations up to 45 percent by weight may be employed. In solid or dust compositions, the concentrations of the amine compounds can be from 0.0001 to 98 percent by weight.

In compositions to be employed as concentrates, the amine compounds can be present in a concentration of from 0.01 to 98 percent by weight.

In the preparation of dust compositions, n-decylthioethylamine can be admixed with any of the finely divided solids, such as pyrophyllite, talc, chalk, gypsum and the like. In such operations, the finely divided carrier is ground or mixed with the said compounds or wet with a solution of the compounds in a volatile organic solvent. Similarly, dust compositions containing the products can be prepared using various solid surface active dispersing agents such as fuller's earth, bentonite, attapulgite and other clays. Depending upon the proportions of ingredients, these dust compositions can be employed for the control of pests or employed as concentrates and subsequently diluted with an additional solid surface active dispersing agent or with pyrophyllite, chalk, talc, gypsum and the like to obtain the desired amount of active ingredient in a composition adapted to be employed as described herein. Also, such dust compositions when employed as concentrates can be dispersed in water, with or without the aid of dispersing agents to form spray mixtures.

Further, spray compositions can be prepared by incorporating the amine or its liquid or dust concentrate compositions, in mixtures with surface-active dispersing agents such as an ionic or non-ionic emulsifying agent. Such spray compositions are readily employed for the control of microbes or are

3

dispersed in liquid carriers to form diluted sprays containing the compounds in any desired amount suitable for microbial control. The choice of dispersing agents and amounts thereof employed are determined by the ability of the agents to facilitate the dispersion of the concentrate in the liquid carrier to produce the desired spray compositions.

Similarly, the n-decylthioethylamine can be admixed with a suitable water-immiscible organic liquid and a surface-active dispersing agent to produce an emulsifiable concentrate which can be further diluted with water and oil to form spray mixtures in the form of oil-in-water emulsions. In such compositions, the carrier comprises an aqueous emulsion, i.e., a mixture of water-immiscible solvent, emulsifying agent and water. Suitable organic liquids which can be employed in the composition include petroleum oils and distillates, toluene, liquid halohydrocarbons and synthetic organic oils. The surface-active dispersing agents are usually employed in liquid compositions in the amount of from 0.1 to 20 percent by weight of the combined weight of the dispersing agent and active compound.

In addition, other liquid compositions containing the desired amount n-decylthioethylamine can be prepared by dissolving said amine in an organic liquid such as acetone, methylene chloride, chlorobenzene and petroleum distillates. The preferred organic solvent carriers are those which are adapted to accomplish the penetration and impregnation of the environment to be treated.

In further embodiments, the compounds as employed in accordance with the present invention, or compositions containing the same, can be advantageously employed in the methods described herein in combination with one or more pesticidal or preservative compounds. In such embodiment, such pesticidal or preservative compound is employed either as a supplemental active constituent, an additament or as an adjuvant. Representative pesticidal or preservative compounds include the substituted phenols, cresols, substituted cresols and their metal salts, the bisphenols and thiobisphenols, the halogenated salicylanilides, the organosulfur compounds, the carbamate compounds, the quaternary ammonium compounds, the organometallic compounds, the inorganic salts and miscellaneous other compounds.

For treating a recirculating cooling water system, it is preferred that n-decylthioethylamine is incorporated into the system by means of a slug dose pumped on a daily to weekly basis. It is also preferred that the resulting concentration of the amine compound in the recirculating cooling water is from 0.1 to 100 ppm by weight. Such treatment conditions typically result in good to excellent control of biofouling in the cooling tower system.

The following examples further illustrate the present invention.

The media used for Examples 1 through 6 described herein are listed below.

## NUTRIENT BROTH

| Ingredient | Amount |
|---|---|
| Difco Nutrient Broth | 0.8 gram (g) |
| Deionized Water | 1.0 liter (l) |

## NUTRIENT AGAR

| Ingredient | Amount |
|---|---|
| Difco Nutrient Agar | 23.0 g |
| Deionized Water | 1.0 l |

## MALT YEAST AGAR

| | |
|---|---|
| Difco Malt Agar | 45.0 g |
| Difco Yeast Extract | 3.0 g |
| Deionized Water | 1.0 l |

Example 1 - Minimum Inhibitory Concentration (MIC) Procedure

The agar (nutrient agar) was dispensed in 30 ml aliquots into 25 x 200 millimeter (mm) test tubes, capped and autoclaved for 15 minutes at 115°C. The test tubes containing the agar were cooled in a water bath until the temperature of the agar was 48°C and then an appropriate amount of the one percent solution of the test compound was added (except in the controls where no test compound was added) to the respective test tubes so that final concentrations of 500, 250, 100, 50, 25, 10, 5, 2.5, 1.0 and 0 parts per million (ppm) of the test compound in the agar were obtained. The afar solutions were each mixed and poured into individual petri plates so that each petri plate contained agar having a known concentration of test compound dispersed therein. After drying for 24 hours, the petri plates were inoculated with bacteria.

The inoculation with bacteria was accomplished using the following procedure. Twenty-four hour cultures of the bacteria were prepared by incubating the bacteria in tubes containing nutrient broth for 24 hours at 30°C in a shaker. Dilutions of the 24 hour culture were made so that a suspension was made, containing about $10^8$ colony forming units (CFU) per ml of suspension of bacteria. Aliquots of 0.3 ml of the above suspension were used to fill individual wells of a Steer's Replicator. The Steer's Replicator was then used to inoculate the petri plates.

The petri plates were incubated at 30°C for 48 hours and then read to determine if the test compound which was incorporated into the agar prevented growth of the respective bacteria. The minimum inhibitory concentration (MIC) for each bacteria was defined as the lowest concentration of the test compound which prevented growth of that bacteria.

Example 2 - Kill Time Evaluation

Materials and Methods

Hard water was prepared by sterilizing deionized water and adjusted to 500 ppm hardness and 100 ppm alkalinity by addition of 16.7 ml of sterile $CaCl_2 \cdot 2H_2O$ (36.8 g/l), 16.7 ml of sterile $MgSO_4 \cdot 7H_2O$ (12 g/l), and 5 ml of sterile $NaHCO_3$ (16.8 g/l) to 1 liter of water. The pH was adjusted by addition of diluted NaOH or acetic acid.

Kill Time Procedure

Nutrient broth containing 300 ppm total organic carbon (TOC) and 800 ppm total dissolved solids (TDS), was adjusted to pH 8.5 with NaOH and dispensed in 10 ml aliquots into 18 x 150 mm test tubes. These tubes were capped and autoclaved for 15 minutes at 121°C. Immediately before use, 50 microliters ($\mu$l) of a heat sterilized solution of 31.74 g/l $MgCl_2$ and 73.99 g/l $CaCl_2$ was added to tubes designated to contain 500 ppm hardness. The tubes with and without added hardness were readjusted to pH 8.5 by addition of appropriate amounts of a filter sterilized solution of 16.8 g/l NaHCO. One hundred and eighty and 125 $\mu$l of the NaHCO solution were added, respectively, to tubes with and without added hardness to achieve a pH of 8.5.

Unless otherwise indicated, Enterobacter aerogenes, ATCC #13048, was used as the test organism. Three 0.1 ml aliquots of a 24 hour nutrient broth culture were pipetted onto three nutrient agar plates and spread uniformly with a Petri dish spreader. After 24 hours' growth, the cells were scraped and washed off the agar surface with sterile glass rods (hockey sticks) and sterile saline solution. After vigorous mixing (vortexing) to break up clumps, the cell suspension was filtered through a sterile filter (Whatman #4) to remove residual clumps. The resultant cell suspension was subsequently diluted with sterile saline to give 1:100 dilutions which resulted in an optical density (O.D.) at 550 nanometers (nm) of 0.06 (Bausch & Lomb Spectronic 710 equipped with a flow thru cell). Solutions with this optical density, when diluted 1:100, contained approximately $10^{10}$ CFU/ml when plated on standard nutrient agar. The exact number of organisms was determined by making serial dilutions of the cell suspension and plating them on nutrient agar plates. Each of the serial dilution tubes was also streaked on a nutrient agar plate. These streaks of known concentrations of organisms were then used as controls to determine the number of organisms in the test samples.

Just prior to the addition of the test compounds, 0.1 ml of the cell suspension containing approximately $10^{10}$ cells/ml was added to the prepared broth tubes. Solutions of 0.1 percent weight/weight (w/w) of experimental compound were prepared immediately before use. Appropriate amounts of these solutions were added to achieve final concentrations of 100, 50, 25, 10, 5 ppm of active ingredient in broth tubes both with and/or without hardness. The tubes were then incubated at 30°C. After three and/or 24 hours, dilutions of the broth tubes were made by addition of 0.1 ml of the broth into 9.9 ml of 0.85 percent saline containing 100 ppm $NaHSO_3$. From the saline tube the samples were streaked with cotton swabs onto nutrient agar plates which also contained 100 ppm $NaHSO_3$.

The plates were incubated for 24 hours and then read. The number of organisms present in the broth tubes was determined by comparing these plates to the control plates of the serial dilution tubes.

Example 3 - Effect of pH on Kill Time Activity of n-decylthioethylamine (DTEA) Against Enterobacter aerogenes

Dilute (1/10) nutrient broth was prepared according to standard methods known in the art and then adjusted to a variety of pH's by the addition of NaOH and HCl. The Kill Time Procedure substantially similar to that described in Example 2 was performed. High water hardness was not evaluated in this study. The results of this procedure were as follows.

| Concentration (ppm) of DTEA That Kills all Cells in 3 Hours at Various pH's | | | | | | | |
|---|---|---|---|---|---|---|---|
| pH | 5 | 6 | 7 | 8 | 9 | 10 | 11 | 12 |
| ppm | 50 | 50 | 20 | 10 | 5 | ≦5 | ≦5 | ≦5 |

Example 4 - Effect of Chain Length on Kill Time Activity

The Kill Time Evaluation substantially similar to that described in Example 2 was performed. The results were as follows:

| Time | pH | (ppm CaCo₃) | n-hexylthio-ethylamine* | n-octylthio-ethylamine* | n-decylthio-ethylamine | n-dodecylthio-ethylamine* | n-tetradecyl-thioethylamine* |
|---|---|---|---|---|---|---|---|
| | | | | | Ppm of the Compound that Kill all Cells | | |
| 3 hr | 8.5 | 500 | 500 | 150 | 20 | 50 | >500 |
| 24 hr | 8.5 | 500 | 250 | 75 | 40 | 150 | >500 |

Test for hardness:

Bausch & Lomb test kit for total hardness which measures both Ca and MgCo₃ hardness as ppm CaCo₃.

*Not an example of the present invention.

Example 5 - Effect of Chain Length on MIC of Certain alkylthioethylamines Against Enterobacter aerogenes at Alkaline pH

The MIC procedure substantially as described in Example 1 was performed. High water hardness was not evaluated in this study. The results were as follows:

7

| Compound | MIC at pH 8.2 |
|---|---|
| n-hexylthioethylamine* | 250-500 |
| n-octylthioethylamine* | 25 |
| n-nonylthioethylamine* | 25 |
| n-decylthioethylamine | 10-25 |
| n-undecylthioethylamine* | 50 |
| n-dodecylthioethylamine* | 50-100 |
| n-tetradecylthioethylamine* | >500 |

*Not an example of the present invention

Example 6

The kill time procedure substantially as described in Example 2 was performed using Aspergillus niger at a pH of 8.2 to 8.3. Malt yeast agar was used instead of nutrient agar and the incubation times were extended to accommodate the slower growing fungi cells. The results are as follows.

| Compound | Ppm of Compound that Resulted in Kill of All Cells at Various Times | | |
|---|---|---|---|
| | 3 hr. | 6 hr. | 24 hr. |
| n-octylthioethylamine* | 50 | 25 | 10 |
| n-decylthioethylamine | 3.5 | 0.5-3.5 | 0.1 |

* not an example of this invention

Example 7

Using procedures substantially similar to those described in Applied Microbiology, Vol. 7, pp. 205-211 (1959), an evaluation of n-octylthioethylamine and n-decylthioethylamine was performed against Chlorella vulgaris in Chu broth medium*. Various concentrations of the compound to be tested were added to separate algae cultures and held for various periods of time (5 to 168 hours). Untreated control algae cultures were also included. After the appropriate exposure periods, the algae cultures were subcultured by diluting 100 fold into fresh Chu broth medium and then incubated. the amounts of growth for treated cultures were compared to untreated control cultures. The untreated control cultures exhibited growth. Table 1 shows the lowest concentration (ppm) of test compound that resulted in no algae growth after subculturing.

## Table 1

### Parts Per Million (ppm) of Compound That Killed All Cells In the Designated Time

| Compound | Time Exposed to Compound | | | |
|---|---|---|---|---|
| | 5 hours | 24 hours | 48 hours | 168 hours |
| n-octylthioethylamine [1] | 100 | 250 | 250 | 250 |
| n-decylthioethylamine | 100 | 100 | 50 | 25 |

[1] comparative example

*Composition of Chu Broth Medium:

| Ingredient | Amount |
|---|---|
| $Ca(NO_3)_2$ | 0.04 grams (g) |
| $K_2HPO_4$ | 0.01 g |
| $MgSO_4 \cdot 7H_2O$ | 0.025 g |
| $Na_2CO_3$ | 0.02 g |
| $Na_2SiO_3$ | 0.025 g |
| $FeCl_3$ | 0.0008 g |
| water | 1.0 liter (1) |

pH adjusted to 8.2

### Example 8

In a cooling tower trial of n-decylthioethylamine in comparison to no biocide in a duplicate tower, 15 ppm of n-decylthioethylamine when added twice a week to the recirculating water having a pH of 8.5 and a hardness of 900 ppm was able to prevent the growth of any algae in the treated tower or basin. In comparison, the tower without any added biocide became heavily fouled with algae in the same two week period of time.

## Claims

1. A method for inhibiting microorganisms under conditions of alkaline pH and/or at a high water hardness, comprising:

   contacting said microorganisms with an effective amount of n-decylthioethylamine or the acid addition salts thereof.

2. The method of Claim 1 wherein the alkaline pH is between 7.5 and 12 and said high water hardness is between 150 ppm and 2,000 ppm.

3. The method of Claim 2 wherein the alkaline pH is between 8 and 9.5 and the water hardness is between 300 ppm and 1,500 ppm.

4. The method of any one of Claims 1 to 3 carried out in a cooling tower, a paper mill, a paint or paint film, a cosmetic, or a metalworking fluid.

5. The method of Claim 4 wherein the effective amount is from 0.1 ppm to 500 ppm.

6. The method of Claim 5 wherein the effective amount is from 1 ppm to 50 ppm.

7. The method of Claims 4, 5, or 6 wherein the hydrochloride salts of the n-decylthioethylamine compound are employed.

8. The use of n-decylthioethylamine for inhibiting microorganisms at alkaline pH and/or high water hardness.

**Revendications**

1. Procédé pour inhiber des microorganismes dans des conditions de pH alcalin et/ou de dureté élevée de l'eau, qui comprend:
   la mise en contact desdits microorganismes avec une quantité efficace de n-décylthioéthylamine ou de ses sels d'addition d'acides.

2. Procédé selon la revendication 1, dans lequel le pH alcalin est compris entre 7,5 et 12 et ladite dureté élevée de l'eau est comprise entre 150 ppm et 2000 ppm.

3. Procédé selon la revendication 2, dans lequel le pH alcalin est compris entre 8 et 9,5 et la dureté de l'eau est comprise entre 300 ppm et 1500 ppm.

4. Procédé selon l'une quelconque des revendications 1 à 3, effectué dans une tour de refroidissement, une fabrique de papier, une peinture ou un film de peinture, un produit cosmétique ou un liquide pour transformation des métaux.

5. Procédé selon la revendication 4, dans lequel la quantité efficace va de 0,1 ppm à 500 ppm.

6. Procédé selon la revendication 5, dans lequel la quantité efficace va de 1 ppm à 50 ppm.

7. Procédé selon l'une quelconque des revendications 4, 5 et 6, dans lequel on utilise les sels chlorhydrate de la n-décylthioéthylamine.

8. Utilisation de la n-décylthioéthylamine pour inhiber les microorganismes dans des conditions de pH alcalin et/ou de dureté élevée de l'eau.

**Patentansprüche**

1. Verfahren zur Hemmung von Mikroorganismen unter Bedingungen von alkalischem pH und/oder hoher Wasserhärte, umfassend:
   Kontaktieren der Mikroorganismen mit einer wirksamen Menge an n-Decylthioethylamin oder dessen sauren Additionssalzen.

2. Verfahren nach Anspruch 1, worin der alkalische pH zwischen 7,5 und 12 und die hohe Wasserhärte zwischen 150 und 2.000 ppm ist.

3. Verfahren nach Anspruch 2, worin der alkalische pH zwischen 8 und 9,5 und die Wasserhärte zwischen 300 und 1.500 ppm ist.

4. Verfahren nach einem der Ansprüche 1 bis 3, das in einem Kühlturm, einer Papiermühle, einer Anstrichfarbe oder einem Anstrichfilm, einem Kosmetikum oder einer Flüssigkeit zur Metallbearbeitung bzw. -verarbeitung durchgeführt wird.

5. Verfahren nach Anspruch 4, worin die wirksame Menge von 0,1 ppm bis 500 ppm ist.

6. Verfahren nach Anspruch 5, worin die wirksame Menge von 1 ppm bis 50 ppm ist.

7. Verfahren nach den Ansprüchen 4, 5 oder 6, worin die Hydrochloridsalze der n-Decylthioethylamin-Verbindung verwendet werden.

8. Verwendung von n-Decylthioethylamin zur Hemmung von Mikroorganismen bei alkalischem pH und/oder hoher Wasserhärte.